Europäisches Patentamt

European Patent Office

Office européen des brevets

(11) Publication number: **0 045 554**
**B1**

**EUROPEAN PATENT SPECIFICATION**

(45) Date of publication of patent specification: **03.04.85**

(51) Int. Cl.⁴: **G 01 N 33/00, G 01 N 30/00**

(21) Application number: **81200868.8**

(22) Date of filing: **31.07.81**

(54) **Process for measuring one or more polluting components in a certain atmosphere.**

(30) Priority: **06.08.80 NL 8004487**

(43) Date of publication of application:
**10.02.82 Bulletin 82/06**

(45) Publication of the grant of the patent:
**03.04.85 Bulletin 85/14**

(84) Designated Contracting States:
**AT BE CH DE FR GB IT LI NL SE**

(56) References cited:
**US-A-3 171 028**
**US-A-3 418 514**
**US-A-3 717 028**
**US-A-4 006 624**

**SIEMENS POWER ENGINEERING, vol. 1, no. 11,
1979 Berlin, DE M. BIRKLE et al. "Gas
chromatographs with microcomputer in
automatic air-measuring networks" pages 353-
357
JOURNAL OF PHYSICS E: SCIENTIFIC
INSTRUMENTS, vol. 11, no. 7, 1978 London, GB
R. ANNINO et al. "The use of relative time
programming in a gas chromatograph breath
analyser" pages 581-587**

(73) Proprietor: **CHEMICAL LABORATORY
INSTRUMENTS**
**Ambachtstraat 7**
**NL-5481 SM Schijndel (NL)**

(72) Inventor: **Theulings, Johannes Alphonsus
Henricus**
**Ambachtstraat 7**
**NL-5481 SM Schijndel (NL)**

(74) Representative: **van der Beek, George Frans
et al**
**Nederlandsch Octrooibureau Johan de Wittlaan
15 P.O. Box 29720**
**NL-2502 LS 's-Gravenhage (NL)**

Courier Press, Leamington Spa, England.

## Description

The invention relates to a process for measuring one or more polluting components in a certain atmosphere.

With the generally known and for this purpose available apparatus generally a total spectrum of all components to be measured and being present in a gas or vapour atmosphere or a liquid is obtained, from which spectrum thereafter one or more certain desired components have to be selected and the concentration thereof has to be calculated. Such a method is time consuming. Moreover always a certain inert carrier gas with a known velocity has to be used (Journal of Physics E: Scientific Instruments, Vol. 11, No. 7, 1978, p. 581—587).

The present invention aims at removing these disadvantages. A process was found, with which in a quick and simple way and without the use of a certain inert carrier gas the concentration of one or more components to be examined can be determined, wherein the measurements, moreover, can be repeated in a shorter time than up till now. Further with the apparatus according to the invention a sensitivity in the magnitude of some ppb can be reached, what is about $10^3$ greater than can be reached with the known apparatus.

A big advantage of the process according to the invention is that as carrier gas air may be used, because the components being present herein can be selected out later on.

According to the invention in a process according to the precharacterising part of claim 1, the problem of removing the aforementioned disadvantages is solved by using air as the only carrier gas. An apparatus for use in carrying out the process of the invention is further illustrated hereinbelow with reference to the annexed figures for better understanding of the invention.

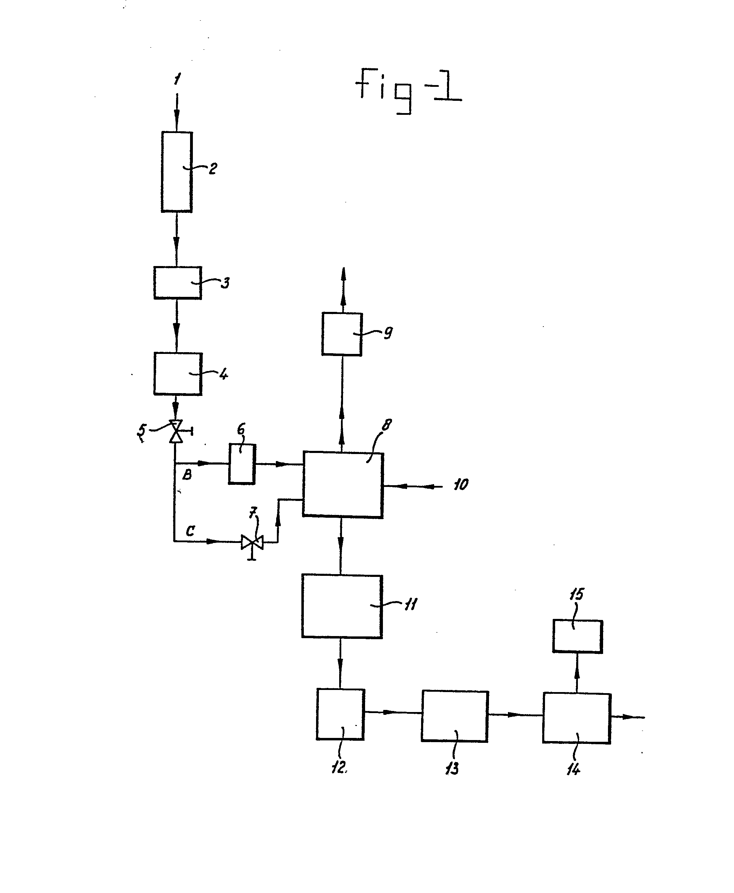

In fig. 1 air is used as carrier gas at inlet 1. This air is sucked in by compressor 4 via a sieve and drying means (2, 3), while the pressure thereof is adjusted by pressure regulator 5.

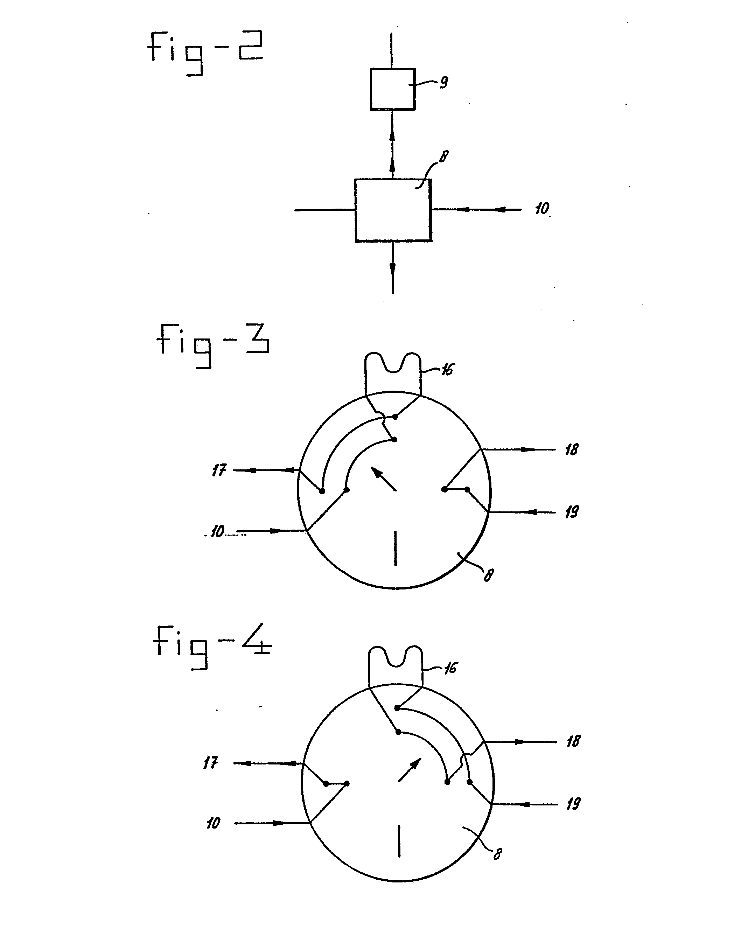

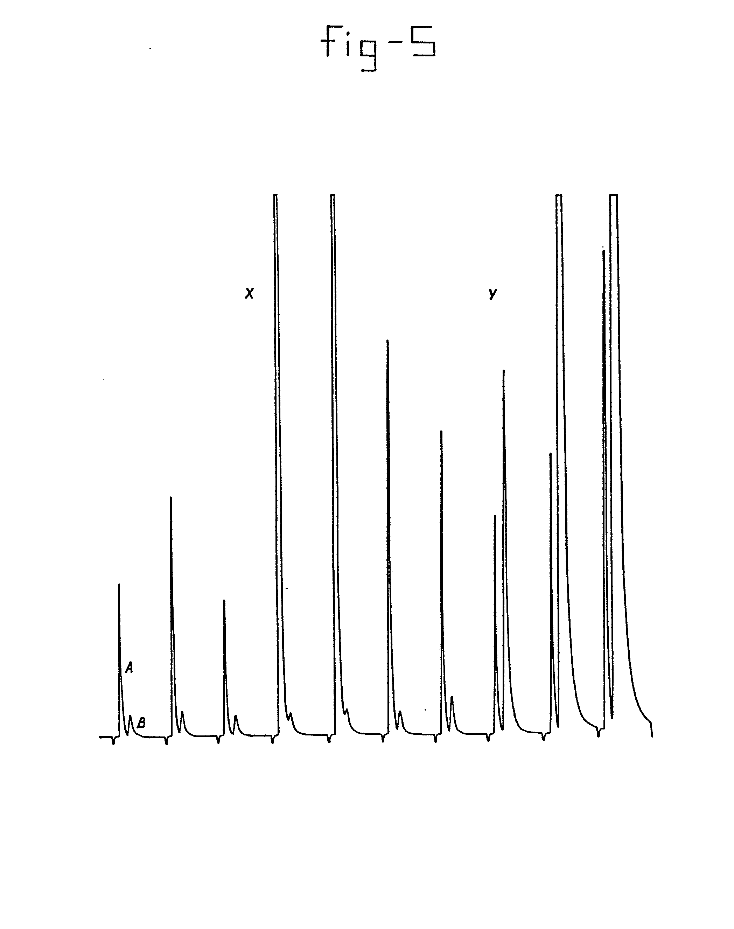

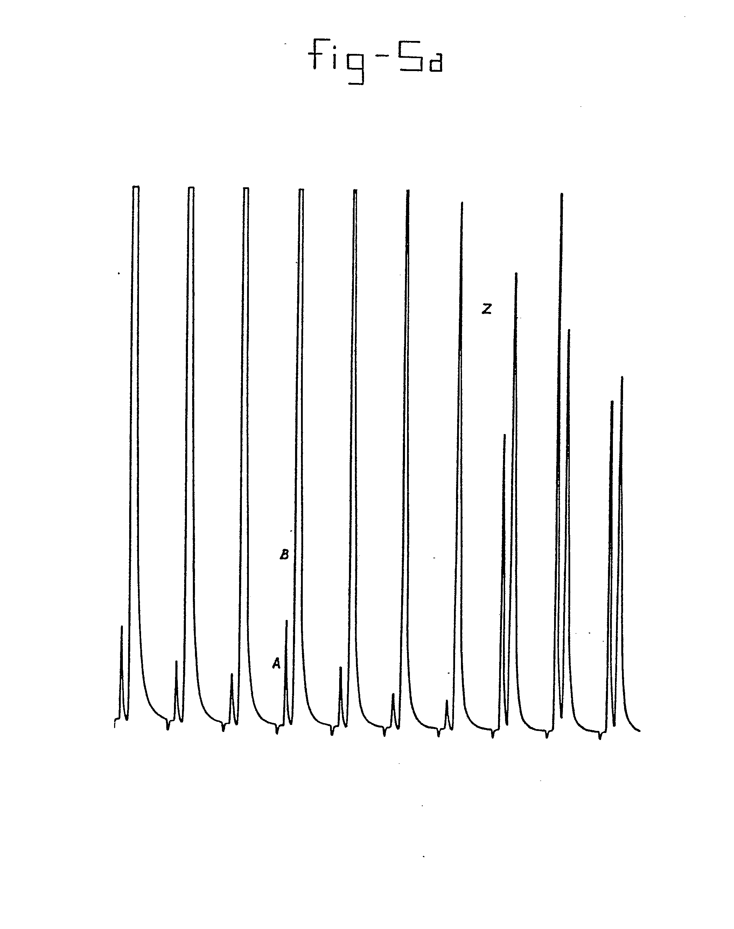

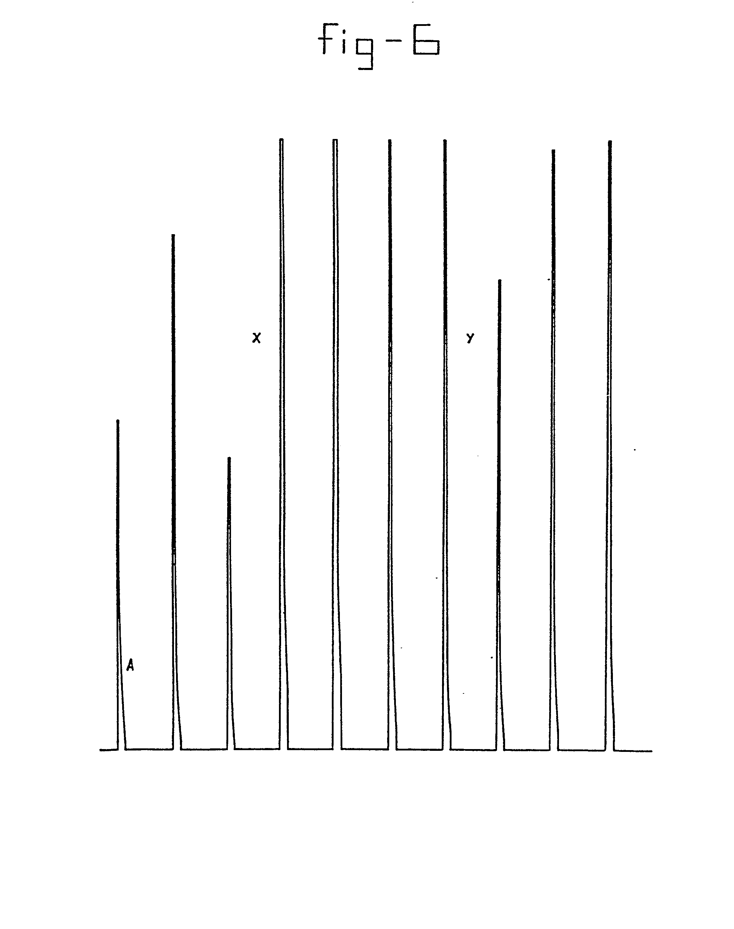

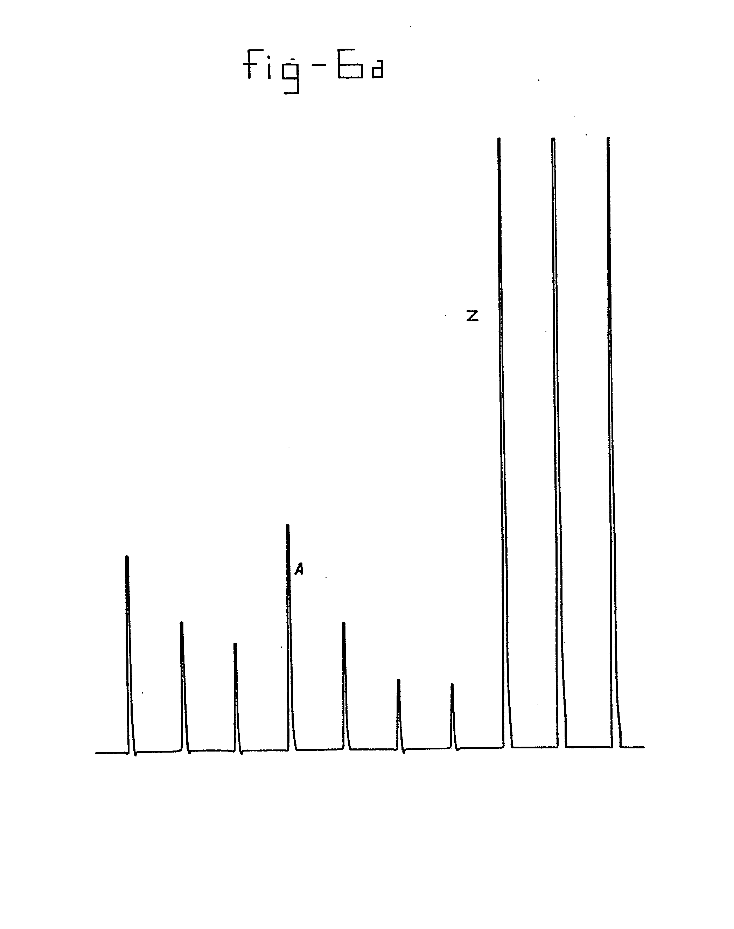

In the system a sieve apparatus can be taken up, which serves to removed undesired contaminations, for example dust or other solid particles. Via B a part of the air is passed via a solenoide (6). This solenoide is controlled by an adjustable solenoide controlling system via sample cock 8 and operates sample cock 8. Via C the air is passed through a through put controlling means 7 which takes care that the air obtains a constant velocity and is passed to sample cock 8 (herein below further illustrated with reference to the figures 2, 3 and 4). Via the solenoide the change-over from fig. 3 to fig. 4 and back is adjusted. In sample cock 8 a certain amount of sample to be measured is injected into a carrier gas.

The mixture of carrier gas and sample is than passed through oven 11. In oven 11 there is an apparatus for separating the components, which consists of a column known per se with therein a suitable chemically separating material. If it is desired to measure a total mixture the column in the oven can be replaced by a simple connecting tube. If desired than also the oven may be deleted. The temperature of the oven, the special chemical material to be used and the length and diameter, as well as the material to be used in the column are dependent on the sample to be examined. The material of the column has to be inert with respect to the gas mixture and may consist of for example glass, stainless steel, copper, aluminium or other suitable materials.

After oven 11 the gas mixture which has been separated in components is passed through detector 12. Herein the concentration of the different components is measured by means of an arbitrary detection system, for example an ionization source, like a flame ionization, an electron receiving detector, a flame photometric detector, an electrolytic or coulometric detector or a heat conductivity detector. Preferably a photo ionization detector is used, also because herefore no other expedient is necessary and because this detector can bring about a separation per se because of the measuring principle. To avoid condensation after the oven it is recommendable that for certain detectors the detector may be heated.

The measuring signals of the detector 12 are passed to eliminator 13. This electronic instrument takes care that only the component(s) is (are) relayed to which the instrument is adjusted and which one wishes to measure. This adjustment is carried out by adjusting a window or windows on the retention time(s) of the component(s) to be measured. All components, which fall outside the range of the adjusted window, are eliminated by this.

The integrator or the peak height measuring system 14 takes care that the remaining signal (the component(s) to be examined) is registered directly in the right concentration, analog or digital. This may be done for example on a registering system.

The integrator or peak height measuring system 14 is preferably connected with an alarm system 15 which comes into operation when the measured value is equal to or higher than an adjusted value. This alarm may give for example a sound or light signal or may be directly connected to a process controlling system.

In the fig. 2, 3 and 4 the operation of sample cock 8 is indicated. Fig. 3 shows the sample drawing and fig. 4 the injection of the sample. The sample is introduced via 10 and the carrier gas via 19. In 16 a certain volume of the sample is taken, which after activation of the operation cock by the solenoide controlling system is passed in the carrier gas via 18 to oven 11 (fig. 4). Continuously the sample to be examined is passed via inlet 10 and via 16 and outlet 17 through sample cock 8 by means of pump 9.

Via 10 also from different conducts arbitrary samples can be taken after each other and be analysed. Connecting and disconnecting of these conducts takes place by means of the solenoide controlling system.

If desired the apparatus according to the invention can be taken to different places where one wishes to carry out the examination. The only requirement is than that a source of electricity is present.

Instead of air which is used as carrier gas of course also air from pressure cylinders or instrument operation air can be used.

It is further possible to analyse sample continuously after each arbitrary time or after fixed times. The repetition of the drawing of a sample and the measurement can take place after shorter times than with the known apparatus. For control means at any arbitrary moment a standard sample can be analysed, whereafter the eliminator can be adjusted on the desired retention time automatically, so that always the right concentration of the component(s) to be examined can be obtained.

In the fig. 5 and 5a and 6 and 6a an example is given from a measurement of a sample consisting of benzene and toluene, the retention times of which are close to each other and therefore give difficulties in the right determination of the concentration of the desired substance. Fig. 5 and 5a give the spectrum of as well benzene (A) as toluene (b) and fig. 6 and 6a the spectrum of only (A) by eliminating (B) using the apparatus according to the invention. The variation of the peak height in both figures is dependent on the changing concentrations in the atmosphere to be examined. The high sensitivity appears from these figures. At point X the constant atmosphere was changed by changing the concentration of the sample in the atmosphere by moving both vessels containing the samples. At point Y this was done by only moving the toluene sample. At point Z this was done with the benzene sample, herein the reduction of the toluene concentration appears clearly already. The fact that at point Y also the benzene concentration increased is the result of the sensitivity of the measuring apparatus. Fig. 6 and 6a show only the peaks for benzene (A).

The invention also relates to a process for measuring the concentration of one or more components in a gas or vapour mixture or a liquid while using the described apparatus. The carrier which is used is again air.

## Claims

1. A process for measuring one or more polluting components in a certain atmosphere, wherein the gas to be examined is mixed with a carrier gas obtained from a supply system, is passed via a sample cock for the supply of a certain amount of gas to be examined together with the carrier gas through an oven containing a separation apparatus for the components of the gas to be examined, a detector, an eliminator for eliminating components not to be determined, and an integrator or peak height measuring system for registering the concentration of the component(s) to be examined, characterized in that air is used as the only carrier gas.

2. The process of claim 1, characterized in that as detector a photo-ionization source having an electron voltage suitable for physical separations is used.

## Patentansprüche

1. Verfahren zum Ermitteln der Konzentration eines oder mehrerer Schadstoffe in einer bestimmten Atmosphäre, wobei das zu untersuchende Gas mit einem von einem Speisesystem gelieferten Trägergas vermischt und über einen Probenhahn für die Zufuhr einer bestimmten Menge von zu untersuchendem Gas zusammen mit dem Trägergas durch einen Ofen geleitet wird, der eine Trennvorrichtung für die Komponenten des zu untersuchenden Gases, einen Detektor, eine Eliminiereinrichtung zum Eliminieren von nicht zu bestimmenden Komponenten und einen Integrator oder ein Spitzen(wert)höhen-Meßsystem zum Registrieren der Konzentration der zu untersuchenden Komponente(n) aufweist, dadurch gekennzeichnet, daß Luft als einziges Trägergas benutzt wird.

2. Verfahren nach Anspruch 1, dadurch gekennzeichnet, daß als Detektor eine Photoionisationsquelle mit einer für physikalische Trennungen geeigneten Elektronen-spannung verwendet wird.

## Revendications

1. Procédé pour mesurer la concentration d'un ou plusieurs constituants polluants dans une atmosphère déterminée, dans lequel le gaz à examiner est mélangé avec un gaz porteur provenant d'un système d'alimentation, passe dans un robinet d'échantillonnage en vue de la fourniture d'une certaine quantité de gaz à examiner en même temps que le gaz porteur au travers d'une étuve contenant un dispositif de séparation des constituants du gaz à examiner, un détecteur, un éliminateur pour éliminer des constituants ne devant pas être déterminés, et un intégrateur ou système de mesure de hauteur de pic pour enregistrer la concentration du ou des constituants à examiner, caractérisé par le fait qu'on utilise l'air comme seul gaz porteur.

2. Procédé selon la revendication 1, caractérisé par le fait qu'on utilise comme détecteur une source de photo-ionisation ayant une tension électronique appropriée pour des séparations physiques.

Fig-1

Fig-2

Fig-3

Fig-4

# Fig-5

# Fig-5a

# Fig-6

fig-6a